# EUROPEAN PATENT APPLICATION

(11) **EP 3 816 118 A1**
(43) Date of publication of application: **05.05.2021**
(21) Application number: 19825693.5
(22) Date of filing: 28.06.2019
(51) Int. Cl.: C02F 3/10, C02F 3/34

(54) **WATER TREATMENT METHOD**

(30) Priority: 29.06.2018 JP 2018124399; 23.01.2019 JP 2019009004
(71) Applicant: Kuraray Co., Ltd., Kurashiki-shi, Okayama 710-0801 (JP)
(72) Inventor: HIRAI, Yusuke, Saijo-shi, Ehime 793-8585 (JP); HAYASHI, Yoshiyuki, Saijo-shi, Ehime 793-8585 (JP); OSAWA, Takuya, Saijo-shi, Ehime 793-8585 (JP); UKAI, Yu, Saijo-shi, Ehime 793-8585 (JP); YOSHIHARA, Mototsugu, Saijo-shi, Ehime 793-8585 (JP)
(74) Representative: Müller-Boré & Partner Patentanwälte PartG mbB
(86) International application number: PCT/JP2019/025978
(87) International publication number: WO 2020/004662

(57) **Abstract**

There is provided a method for treating water comprising passing water to be treated containing organic matters and ammonia nitrogen through a reaction tank containing a carrier for treatment under aerobic conditions, wherein a water content of the carrier is 50 % or more and 96 % or less; the carrier has continuous pores with a pore size of 30 µm or less; an organic matter concentration in the water to be treated is 100 mg/L or less as a BODs, and an ammonia nitrogen concentration is 50 mg/L or less; a retention time of the water to be treated in the reaction tank is 2 hours or less; and the organic matters and the ammonia nitrogen in the water to be treated are treated in the same tank. Thus, excellent treated water with stable treating performance can be obtained when conducting biological treatment of water to be treated containing organic matters and ammonia, even with a low concentration of organic suspended solids in water to be treated.

## Description

### TECHNICAL FIELD

The present invention relates to a method for treating water wherein water to be treated containing organic matters and ammonia nitrogen (hereinafter, referred to as "NH₄-N") is biologically treated in a short time.

### BACKGROUND ART

River water, lake water, or underground water is commonly treated by treating organic matters and NH₄-N in water to be treated with a combination of, for example, biological treatment, an RO membrane, activated charcoal and/or sand filtration, and finally adding hypochlorous acid to remove remaining NH₄-N in the water to be treated.

When a large amount of NH₄-N remains, the dosing amount of hypochlorous acid increases, leading to increase in running cost, and smell derived from chlorine remains. Therefore, a running cost is reduced and quality of treated water is improved by removing NH₄-N as much as possible in a pre-stage.

Examples of a procedure for biological treatment used in a pre-stage include an activated sludge method, a rotating disk method and a carrier method.

An activated sludge method is a commonly used method for biological treatment. However, when water to be treated containing organic matters and NH₄-N such as river water, lake water and underground water are treated in a short time, activated sludge tends to be disrupted, sometimes leading to difficulty in operation.

Patent Reference No. 1 has described water treatment method using a rotating disk. However, in a rotating disk method a biofilm may be peeled from a disk, leading to unstable treatability.

As described in Patent Reference Nos. 2 and 3, treatability is stable and operation is easy in a water treatment method using activated charcoal or a sponge as a carrier. However, when water to be treated contains organic matters, it may be difficult to treat both organic matters and NH₄-N in a short time.

Since treating performance depends on the number of bacteria which a carrier can hold, a carrier with a high water content is used for increasing a space to which bacteria attach alive. However, a carrier with a high water content such as hydrogel described in Patent Reference No. 4 has poor physical strength, so that it cannot be used for a long period and thus the carrier must be periodically added.

A carrier carrying bacteria can be prepared commonly by a method comprising contacting activated sludge with a carrier at the start-up, or by the use of a carrier preliminarily carrying bacteria. However, activated sludge cannot be used in some of treatment facilities. Furthermore, preparation of a carrier carrying bacteria may require a longer time and a higher expense. Bacteria contained in water to be treated can be carried by a carrier, but when a concentration of organic suspended solids (hereinafter, referred to as "organic SS") in water to be treated is low, a conventional method requires a long period of time for allowing a carrier to carry a sufficient number of bacteria for treatment.

### PRIOR ART REFERENCES

### Patent References

Patent Reference No. 1: JP 54-147649 A
Patent Reference No. 2: JP 9-23881 A
Patent Reference No. 3: JP 2017-202473 A
Patent Reference No. 4: JP 7-8984 A

### SUMMARY OF THE INVENTION

### PROBLEMS TO BE SOLVED BY THE INVENTION

The present invention has been made to solve the above problems. An object of the present invention is to provide a method for treating water, wherein the method can provide excellent treated water with stable treating performance when conducting biological treatment of water to be treated containing organic matters and NH₄-N, even if the amount of organic SS contained in water to be treated is small.

### MEANS FOR SOLVING THE PROBLEMS

The above problems can be solved by providing a method for treating water comprising passing water to be treated containing organic matters and NH₄-N through a reaction tank containing a carrier for treatment under aerobic conditions, wherein
a water content of the carrier is 50 % or more and 96 % or less;
the carrier has continuous pores with a pore size of 30 µm or less;
an organic matter concentration in the water to be treated is 100 mg/L or less as a BOD₅, and an NH₄-N concentration is 50 mg/L or less;
a retention time of the water to be treated in the reaction tank is 2 hours or less; and
the organic matters and the NH₄-N in the water to be treated are treated in the same tank.

Here, it is preferable that a concentration of organic SS in the water to be treated is 100 mg/L or less.

Here, it is preferable that activated sludge is not used at the start-up of the reaction tank. Furthermore, it is preferable that water treatment equipment in which the method for treating water is performed does not include an activated sludge tank.

Here, it is preferable that at the start-up of the reaction tank, the water to be treated is contacted with the carrier which is not pre-treated to carry bacteria so that the carrier carries bacteria capable of treating organic matters and NH₄-N.

Here, it is preferable that the carrier is a gel carrier made of a polyvinyl alcohol.

### EFFECTS OF THE INVENTION

According to the present invention, there can be provided a method for treating water, wherein the method can provide excellent treated water with stable treating performance when conducting biological treatment of water to be treated containing organic matters and NH₄-N, even if the amount of organic SS contained in water to be treated is small.

### BRIEF DESCRIPTION OF THE DRAWINGS

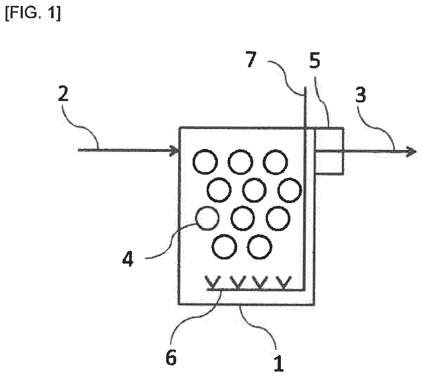

FIG. 1 is a flow diagram illustrating an example of treatment equipment used in a treatment method of the present invention.

### MODES FOR CARRYING OUT THE INVENTION

### (Treatment equipment)

The present invention relates to a water treatment method wherein water to be treated containing organic matters and NH₄-N is biologically treated. Herein, water to be treated is preferably at least one selected from the group consisting of river water, lake water and underground water with a relatively lower concentration of organic matters and NH₄-N. According to the present invention, such water to be treated can be efficiently treated and the treated water could be used as tap water.

There will be described an example of biological treatment equipment used in a treatment method of the present invention. FIG. 1 illustrates an example of biological treatment equipment used in a treatment method of the present invention. There will be described a treatment method of the present invention with reference to a case where water is treated using this treatment equipment.

### (Process 1)

Process 1 in the present invention is a process of feeding water to be treated to a reaction tank (aerobic tank). Process 1 will be described with reference to the treatment equipment illustrated in FIG. 1. In this treatment equipment, water to be treated is introduced through a water-to-be-treated feed pipe 2 into the treatment equipment. This treatment equipment has only an aerobic tank 1 as a reaction tank, but various auxiliary equipment such as an activated sludge tank and another aerobic tank is not excluded.

### (Process 2)

Process 2 in the present invention is a process where in the aerobic tank 1, bacteria carried by carrier 4 decompose organic matters and then primary treated water is discharged. This carrier 4 carries bacteria capable of decomposing organic matters. Furthermore, Process 2 in the present invention is a process wherein, in addition to decomposition of organic matters, NH₄-N in water to be treated is nitrified to nitrous acid and nitric acid in the aerobic tank 1 and then primary treated water is discharged. This carrier 4 carries bacteria capable of nitrification. In other words, this carrier 4 carries nitrifying bacteria. The bacteria capable of decomposing organic matters and the bacteria capable of nitrification can be of the same type. Furthermore, water to be treated contains organic SS which is an insoluble organic substance, which contains a small amount of bacteria which can be carried by the carrier 4. In Process 2, organic matters and NH₄-N in the water to be treated are treated in the same tank (aerobic tank 1).

A concentration of organic matters in water to be treated fed into the aerobic tank 1 is 100 mg/L or less as a BOD₅. For efficient nitrification of NH₄-N, a BOD₅ is preferably 60 mg/L or less, more preferably 40 mg/L or less. Water to be treated selected from the group consisting of river water, lake water and underground water which is treated by the present invention contains organic matters, and therefore, a BOD₅ is generally more than 0 mg/L. According to the present invention, both organic matters and NH₄-N in water to be treated can be treated in the same tank. Here, a BODs of water to be treated can be, for example, 5 mg/L or more, further 6 mg/L or more.

Organic matters which can be removed by biological treatment are typically soluble, and soluble components in organic matters contained in water to be treated vary, depending on the type of water to be treated. According to the present invention, a soluble BODs (hereinafter, referred to as "s-BODs") in water to be treated can be, for example, 0.5 mg/L or more, further 1.0 mg/L or more. An s-BODs of water to be treated is generally 100 mg/L or less, preferably 60 mg/L or less, more preferably 40 mg/L or less. Here, a BODs denotes a biochemical oxygen demand, which is the amount of dissolved oxygen consumed by bacteria capable of decomposing organic matters contained in water for 5 days (determined in accordance with, for example a method described in JIS K0102 21).

An NH₄-N concentration in water to be treated fed into the aerobic tank 1 is 50 mg/L or less, preferably 20 mg/L or less. Water to be treated selected from the group consisting of river water, lake water and underground water which is treated by the present invention contains NH₄-N and therefore, an NH₄-N concentration is generally more than 0 mg/L. From the viewpoint of necessity of treatment on the assumption of the use as tap water, an NH₄-N concentration is, for example, supposed to be 1 mg/L or more.

A concentration of organic SS in water to be treated fed to the aerobic tank 1 is preferably 100 mg/L or less, more preferably 70 mg/L or less. For sufficiently exerting effects of the present invention, a concentration of organic SS is further preferably 50 mg/L or less. Preferably, water to be treated contains a small amount of organic SS, and its concentration is more than 0 mg/L. In the present invention, even when water to be treated such as river water, lake water or underground water with a low concentration of organic SS is used, organic matters and NH₄-N can be treated in a short time.

At the start-up of the aerobic tank 1, water to be treated is contacted with a carrier which is not pre-treated to carry bacteria so that the carrier can carry bacteria in a short period. From the viewpoint of making the carrier carry bacteria in a shorter period, an organic SS concentration is more preferably 5 mg/L or more.

A hydraulic retention time (HRT) of water to be treated in the aerobic tank 1 is 2 hours or less. An HRT can be 1 hour or less, and even in such a case, treatment sufficiently proceeds. Meanwhile, from the viewpoint of sufficient treatment, an HRT is preferably 0.10 hours or more, more preferably 0.25 hours or more.

In the aerobic tank 1, pH is preferably 5 to 9, more preferably 7 to 8. If pH is out of this range, bacteria hardly grow, and an organic matter decomposition rate and a nitrification rate may be lowered.

A temperature in the aerobic tank 1 is preferably 10 to 40 °C, more preferably 20 °C to 35 °C. If a temperature is out of this range, bacteria hardly grow and an organic matter decomposition rate and a nitrification rate may be lowered.

A DO (Dissolved Oxygen) in the aerobic tank 1 is preferably 2 mg/L or more. If a DO is less than 2 mg/L, an organic matter decomposition rate and a nitrification rate may be lowered. There are no particular restrictions to the upper limit of a DO, but it is suitably 9 mg/L or less in the light of operation in water treatment.

In the light of decomposition of organic matters and efficient progress of nitrification in Process 2 of the present invention, it is preferable that water to be treated in the aerobic tank 1 is aerated. There are no particular restrictions to an aeration method, and it is preferable that as shown in FIG. 1, the aerobic tank 1 is equipped with an air diffuser 6 connected to an air pipe 7. Air from the air diffuser 6 can aerate water to be treated in the aerobic tank 1, while the water to be treated and a carrier 4 can be adequately fluidized. For further improving fluidity of the carrier 4, the contents in the aerobic tank 1 can be stirred using an agitation apparatus such as a stirrer.

For preventing leakage of the carrier 4, the aerobic tank 1 is preferably equipped with a screen 5 at an outlet of the aerobic tank 1 as shown in FIG. 1.

A volume percent of the carrier 4 added to a tank volume of the aerobic tank 1 (filling rate) can be appropriately determined depending on properties of water to be treated. A filling rate is preferably 5 to 60 %, more preferably 5 to 40 %, further preferably 5 to 30 %, particularly preferably 8 to 20 %, based on volume. With a higher filling rate of the carrier 4, decomposition of organic matters and nitrification can more efficiently proceed, but if a filling rate is too high, fluidity of the carrier 4 may be deteriorated, leading to a lower reaction efficiency.

A carrier used in the present invention has pores (continuous pores) continuing from the surface to the inside. Continuous pores mean not that individual pores exist independently of each other, but that pores are mutually communicated.

A pore size of continuous pores in the carrier is 30 µm or less, preferably 20 µm or less, more preferably 10 µm or less. By using a carrier having continuous pores with a pore size of 30 µm or less, the carrier can efficiently carry bacteria, whereby at start-up, a reaction tank can be started-up without using activated sludge.

Even when an organic SS concentration in water to be treated is low, just contacting water to be treated with a carrier allows for start-up of a reaction tank, resulting in no need for feeding back organic SS to the reaction tank and thus allowing for stable treatment. When water to be treated containing organic matters and NH₄-N is biologically treated, it is generally difficult to remove both organic matters and NH₄-N in a short treatment period, but by using a carrier having continuous pores with a pore size of 30 µm or less, NH₄-N can be removed even for water to be treated containing organic matters. A pore size is preferably 0.1 µm or more. If a pore size is less than 0.1 µm, bacteria may not enter the inside of the carrier.

Here, "a pore size of 30 µm or less" denotes that a pore size of 50 % or more of fine pores in a carrier is 30 µm or less. Furthermore, "a pore size of 0.1 µm or more" denotes that a pore size of 50 % or more of fine pores in a carrier is 0.1 µm or more. Here, a pore size is a diameter of a pore observed by observation of a carrier cross-section by an electron microscope. When a pore is not a true circle, a pore size is defined as a circle equivalent diameter, that is, a diameter of a true circle having the same cross-section area as that of the pore.

A specific method for measuring a pore size is as follows. A cross-section of a carrier is observed by an electron microscope, to obtain an electron microscope image. In the image obtained, ten straight lines are drawn at equal intervals in a longitudinal direction and ten straight lines are drawn at equal intervals in a transverse direction. Then, hundred pores at intersections of straight lines are selected and for each of the pores, a diameter is measured as described above. Here, when no pores are present at an intersection, a pore nearest the intersection is selected. This measurement is conducted for an image with a reduced scale with which a pore does not straddle two intersections.

The phrase, "a pore size of 30 µm or less" as used herein, means that when a diameter of selected pores is measured as described above, the number of pores with a diameter of 30 µm or less is 50 % or more of the number of the whole selected pores. Meanwhile, the phrase, "a pore size of 0.1 µm or more" as used herein, means that when a diameter of selected pores is measured as described above, the number of pores with a diameter of 0.1 µm or more is 50 % or more of the number of the whole selected pores.

A pore size in a carrier surface is preferably 0.1 µm or more, more preferably 0.5 µm or more in an observable range. Meanwhile, a pore size in a carrier surface is preferably 30 µm or less in an observable range. If a pore size in a carrier surface is more than 30 µm, larger organisms other than bacteria easily enter, so that a decomposition rate of organic matters and a nitrification rate may be lowered. A pore size in a carrier surface is more preferably 20 µm or less, further preferably 10 µm or less. A carrier surface is a range observed when a surface of a carrier without being processed by cutting or the like is observed by an electronic microscope. A pore size in a carrier surface is a value measured as described for a method for measuring a pore size in a carrier cross-section.

A water content of a carrier used in the present invention is 50 % or more, preferably 70 % or more, more preferably 85 % or more in terms of mass. When the above range is satisfied, growing environment of bacteria is so favorable that bacterial growth is facilitated and bacteria carrying is promoted. The water content is 96 % or less. With such a water content, a carrier is resistant to breakage, additional installation of a carrier is not necessary, and prolonged operation is possible. A water content can be calculated from a mass difference between a moisture-containing carrier and a completely dried carrier.

There are no particular restrictions to the type of a carrier used in the present invention, and in the light of high affinity for bacteria and excellent survivability of bacteria, a carrier is preferably a polymer gel carrier, more preferably a gel carrier made of a polyvinyl alcohol (hereinafter, referred to as "PVA gel carrier"). A PVA gel carrier can carry many bacteria, and therefore, allow for stable treatment with a short HRT.

The above PVA gel carrier can be an acetalized PVA gel carrier.

A spherical equivalent diameter of a carrier is preferably 1 to 10 mm. If a spherical equivalent diameter is small, a screen mesh must be reduced for preventing leakage of a carrier, and otherwise clogging may occur. A spherical equivalent diameter is preferably 2 mm or more. Meanwhile, if a spherical equivalent diameter is more than 10 mm, fluidity of a carrier may be deteriorated. A spherical equivalent diameter of a carrier is preferably 6 mm or less. Here, a spherical equivalent diameter is a diameter of a sphere having a volume equal to that of a carrier.

There are no particular restrictions to a shape of a carrier, and it can take any shape such as a sphere, a cube, a cuboid and a cylinder. Among these, it is preferably a sphere in the light of efficiency of contact with bacteria.

A specific gravity of a carrier is preferably slightly larger than that of water and is preferably that allowing for fluidizing in an aerobic tank. A specific gravity of a carrier is preferably 1.001 or more, more preferably 1.005 or more. The specific gravity is preferably 1.20 or less, more preferably 1.10 or less, further preferably 1.05 or less.

The present invention relates to a convenient method allowing for start-up without using seed bacteria such as activated sludge at start-up in an aerobic tank 1, whereby start-up can be conducted only by contacting water to be treated with a carrier. In other words, water to be treated is contacted with a carrier which is not pre-treated to carry bacteria, so that the carrier can carry bacteria capable of treating organic matters and NH₄-N. Here, water to be treated generally contains a small amount of the bacteria, and the carrier before start-up does not carry the bacteria. In a preferable aspect, water treatment equipment in which a water treatment method of the present invention is conducted does not include an activated sludge tank in the light of avoiding troublesome and massive treatment equipment. In the light of convenience in operation control, it is not needed to provide equipment for feeding back organic SS into an aerobic tank 1 from a subsequent stage. Although the above aspect can be envisaged, it does not exclude the use of seed bacteria such as activated sludge at start-up, inclusion of an activated sludge tank in water treatment equipment, or providing equipment for feeding back organic SS into the aerobic tank 1.

A treated water after treatment by Processes 1 and 2 described above is subsequently further treated by any treatment method such as coagulation sedimentation, an RO membrane, a UF membrane, an MF membrane, activated charcoal, and sand filtration.

According to the present invention, even when an organic SS concentration in water to be treated is low, a reaction tank can be started up just by contacting the water to be treated with a carrier, allowing for stable treatment without the need for feeding back organic SS to a reaction tank. Furthermore, although NH₄-N treatment is generally conducted after organic-matter treatment, water to be treated containing organic matters and NH₄-N can be biologically treated in the same tank in a method of the present invention where growing environment of bacteria can be sufficiently secured, so that both organic matters and NH₄-N can be removed in a short treatment period.

### EXAMPLES

There will be further specifically described the present invention with reference to Examples.

### [Example 1]

Using treatment equipment shown in FIG. 1, water to be treated containing organic matters and NH₄-N was biologically treated.

### (Water to be treated containing organic matters and NH₄-N)

Water to be treated which was to be biologically treated had the following composition: BOD₅:40 mg/L (s-BODs: 20 mg/L), NH₄-N: 7 mg/L, organic SS: 20 mg/L.

### (Carrier)

In an aerobic tank 1 (volume: 1 L) was installed 0.1 L of a carrier 4 (filling rate: 10 %). The carrier 4 installed was a PVA gel carrier. This carrier 4 was spherical, and a spherical equivalent diameter was 4 mm and a specific gravity was 1.015. The surface and the inside of this carrier was observed using an electron microscope, and mutually communicated pores were observed. Furthermore, a pore size in the surface and the inside of the carrier was measured using the observation image by the electron microscope, and the pore size was 0.1 to 30 µm. A specific measurement method was as follows. A cross-section of the carrier 4 was observed by an electron microscope to give an electron microscope image. In the image obtained, ten straight lines were drawn at equal intervals in a longitudinal direction and ten straight lines were drawn at equal intervals in a transverse direction. Then, hundred pores at intersections of straight lines were selected and for each of the pores, a diameter was measured as described above. As a result, pore diameters of hundred pores were within the range of 0.1 to 30 µm. A water content of the carrier was 94 % by mass. After initiation of passing water, a water content of the carrier 4 is basically unchanged.

### (Treatment equipment)

The aerobic tank 1 is equipped with an air diffuser 6 on the bottom, and water to be treated in the tank is aerated by the air fed through an air pipe 7. For preventing leakage of the carrier 4, the aerobic tank 1 is equipped with a screen 5 at an outlet.

Water to be treated fed through a water-to-be-treated feed pipe 2 to the aerobic tank 1 is subjected to decomposition of organic matters and nitrification of NH₄-N by bacteria carried by the carrier in the aerobic tank 1. A treated water after decomposition of organic matters and nitrification of NH₄-N is discharged through a treated-water pipe 3 out of the aerobic tank 1.

### (Start-up method, management method)

Management conditions of the aerobic tank 1 were as follows; pH: 7.5 to 8.0, DO: 2 to 8 mg/L, and temperature in the aerobic tank 1: 22 °C. A feed volume of water to be treated was set to 1 L/hr such that an HRT became 1 hour, and the water to be treated was fed to the aerobic tank 1 containing a carrier which was not pre-treated to carry bacteria (carrier carrying no bacteria).

Using the treatment equipment described above, water to be treated containing organic matters and NH₄-N as described above was biologically treated.

### (Results)

Water quality of the treated water discharged from the aerobic tank 1 was investigated, and 30 days after passing water, an s-BODs was 1.0 mg/L and an NH₄-N concentration was 0.8 mg/L. Hereinafter, water quality of a treated water is described as an s-BODs.

### [Example 2]

Biological treatment was conducted as described in Example 1, except that for water to be treated, a BODs was 40 mg/L (s-BODs: 20 mg/L), an NH₄-N concentration was 30 mg/L, and an organic SS concentration was 20 mg/L. As a result, for the treated water 27 days after passing water, an s-BODs was 2.0 mg/L and an NH₄-N concentration was 7.4 mg/L.

### [Example 3]

Biological treatment was conducted as described in Example 1, except that for water to be treated, a BOD₅ was 30 mg/L (s-BOD₅: 15 mg/L), an NH₄-N concentration was 10 mg/L, an organic SS concentration was 30 mg/L, the amount of a carrier installed in the aerobic tank 1 was 0.08 L (filling rate: 8 %), and an HRT was 1.5 hours. As a result, for the treated water 30 days after passing water, an s-BODs was 4.0 mg/L and an NH₄-N concentration was 1.0 mg/L.

### [Example 4]

Biological treatment was conducted as described in Example 1, except that for water to be treated, a BOD₅ was 30 mg/L (s-BODs: 20 mg/L), an NH₄-N concentration was 10 mg/L, an organic SS concentration was 20 mg/L, the amount of a carrier installed in the aerobic tank 1 was 0.4 L (filling rate: 40 %), and an HRT was 0.25 hours. As a result, for the treated water 36 days after passing water, an s-BODs was 4.5 mg/L and an NH₄-N concentration was 0.8 mg/L.

### [Comparative Example 1]

Biological treatment was conducted as described in Example 1, except that for water to be treated, a BODs was 30 mg/L (s-BODs: 15 mg/L), an NH₄-N concentration was 10 mg/L, a settlement tank was installed in the subsequent stage of the aerobic tank 1, activated sludge was returned to the aerobic tank 1 such that a concentration of activated sludge in the tank was regulated to be 4000 mg/L, a carrier was not used, and an HRT was 1.5 hours. As a result, for the treated water an s-BODs was reduced to 5 mg/L, but an NH₄-N concentration was reduced at most to about 5 mg/L, and in 10 days, the activated sludge was so disrupted that continuation of operation became difficult.

### [Comparative Example 2]

Biological treatment was conducted as described in Example 2, except that a carrier used was chips of a polyethylene resin carrier, and the amount of the carrier used was 0.1 L (filling rate: 10 %). A pore size of the carrier was observed using an electron microscope, and a pore size of the carrier was 100 to 400 µm (as observed in a cross-section of the carrier, of 100 pores in the image obtained, 80 pores had a pore size within this range and 20 pores had a pore size of 30 µm or less). A water content of the carrier was 31 % by mass. As a result, for the treated water 60 days after passing water, an s-BODs was 4.3 mg/L, but an NH₄-N concentration was reduced at most to 24 mg/L.

### [Reference Example 1]

Biological treatment was conducted as described in Example 2, except that at start-up, to a treatment tank containing a carrier, activated sludge was added to 4000 mg/L, to contact a large amount of bacteria with the carrier. As a result, for the treated water 26 days after passing water, an s-BODs was 2.0 mg/L, and an NH₄-N concentration was 8.0mg/L, which were comparable to Example 2.

Examples 1, 2, 3 and 4 meeting the matters used to specify the present invention exhibited high treating performance even with a small amount of organic SS contained in water to be treated, and provided more excellent treated water than that of Comparative Examples 1 and 2. Furthermore, Example 2 conducted by a method in which only a small amount of bacteria contained in water to be treated was contacted with a carrier exhibited treatment performance comparable to that of Reference Example 1 conducted by a method in which a large amount of bacteria was contacted with a carrier, indicating that even when at start-up, activated sludge is not used or a carrier which is not pre-treated to carry bacteria is used, excellent biological treatment performance is expected.

### [Explanations of Letters or Numerals]

1: Aerobic tank
2: Water-to-be-treated feed pipe
3: Treated-water pipe
4: Carrier
5: Screen
6: Air diffuser
7: Air pipe

## Claims

1. A method for treating water comprising passing water to be treated containing organic matters and ammonia nitrogen through a reaction tank containing a carrier for treatment under aerobic conditions, wherein
a water content of the carrier is 50 % or more and 96 % or less;
the carrier has continuous pores with a pore size of 30 µm or less;
an organic matter concentration in the water to be treated is 100 mg/L or less as a BODs, and an ammonia nitrogen concentration is 50 mg/L or less;
a retention time of the water to be treated in the reaction tank is 2 hours or less; and
the organic matters and the ammonia nitrogen in the water to be treated are treated in the same tank.

2. The method for treating water according to Claim 1, wherein a concentration of organic suspended solids in the water to be treated is 100 mg/L or less.

3. The method for treating water according to Claim 1 or 2, wherein activated sludge is not used at the start-up of the reaction tank.

4. The method for treating water according to any of Claims 1 to 3,
wherein water treatment equipment in which the method for treating water is performed does not include an activated sludge tank.

5. The method for treating water according to any of Claims 1 to 4,
wherein at the start-up of the reaction tank, the water to be treated is contacted with the carrier which is not pre-treated to carry bacteria so that the carrier carries bacteria capable of treating organic matters and ammonia nitrogen.

6. The method for treating water according to any of Claims 1 to 5, wherein the carrier is a gel carrier made of a polyvinyl alcohol.
